# FASCICULE DE BREVET EUROPEEN

(11) **EP 1 088 381 B1**
(45) Date de publication et mention de la délivrance du brevet: **22.09.2004**
(21) Numéro de dépôt: 99925066.5
(22) Date de dépôt: 11.06.1999
(51) Int. Cl.: H02G 3/22

(54) **PROTECTION THERMIQUE FORMANT BOUCLIER THERMIQUE**
WÄRMESCHUTZVORRICHTUNG, WELCHE EIN HITZESCHILD BILDET
THERMAL PROTECTION FORMING A HEAT SHIELD

(30) Priorité: 18.06.1998 FR 9807808
(43) Date de publication de la demande: 04.04.2001
(73) Titulaire: Philec S.A., 54840 Gondreville (FR)
(72) Inventeur: VERLAINE, Philippe, F-54200 Toul (FR)
(74) Mandataire: Poupon, Michel
(86) Numéro de dépôt international: PCT/FR1999/001382
(87) Numéro de publication internationale: WO 1999/066617

(56) Documents cités:
- GB-A- 2 250 996
- US-A- 3 828 119
- US-A- 3 862 353
- US-A- 5 372 886

## Description

L'invention concerne un dispositif de protection thermique des conducteurs électriques, plus particulièrement ceux des fours industriels en électrothermie, inductive, à arc, par résistance ou par rayonnement.

Les spires conductrices des gros inducteurs de fours industriels à induction, sont généralement constituées de tubes profilés en cuivre creux, refroidis par une circulation d'eau qui évacue les pertes joules ainsi que les calories dégagées par la charge chauffée à haute température par induction, et recouverts d'une couche d'isolation électrique qui ne conserve ses propriétés mécaniques et diélectriques que jusque vers 200 ou 220 ° C, voire 300° C pour les plus performants.

Cette isolation électrique est fréquemment endommagée ou brûlée car les spires conductrices sont exposées à divers types de dommages par exemple à des projections de métal en fusion, ou à un rayonnement de chaleur très important en provenance du creuset ou des pièces chauffées à blanc, ou encore à un balayage par des gaz (carbone, acide chlorhydrique, hydrogène..) à haute température dans les fours de pyrolise.

Tout défaut dans l'isolation électrique génère des amorçages entre spires, ou entre les spires et la structure de l'inducteur mise à la terre, ou encore entre les spires et la charge mise à la terre.

Une solution connue pour remédier à ce problème est de noyer l'inducteur dans un cylindre de ciment ou de béton réfractaire.

Cette solution s'applique aux chauffe-lopins à induction mais n'est pas généralisable car elle présente plusieurs inconvénients :
- son volume et son poids sont importants ;
- cet enrobage réfractaire se coule sur place et le remplacement d'un inducteur dans un four de grande dimension deviendrait très long et onéreux ;
- en cas de défaut mineur sur un inducteur (défaut électrique, fuite d'eau...) il serait très difficile de localiser ce défaut pour une réparation partielle sans devoir casser l'ensemble de l'enrobage de béton et sans détériorer l'isolation électrique saine sous-jacente.
- sa mise en place et son entretien sont onéreux.

L'art antérieur cite par ailleurs les documents US 3 828 119, US 3 900 701, US 5 104 735, DE 41 32 390 concernant tous des protections thermiques destinées à des câbles conducteurs électriques souples, unifilaires ou multi filaires.

Ces protections sont constituées d'un enrobage ne nuisant pas à la souplesse desdits conducteurs et résistant à des températures élevées pendant seulement quelques heures. Elles ne conviennent donc pas pour l'application aux fours industriels qui implique que la protection d'une part résiste à des fonctionnements de longue durée (plus de 10 000 h) et en continu, et d'autre part soit rigide de manière à assurer si nécessaire une fonction de support.

Le but de la présente invention est de trouver une isolation thermique capable de supporter les chocs thermiques et résolvant tous les problèmes de l'art antérieur. Cette solution devra notamment être légère, facile à installer, peu onéreuse, suffisamment dense pour être imperméable aux rayonnements de chaleur et aux infiltrations, par exemple de particules de carbone ou de goudron.

Ce but est atteint par l'invention qui consiste en une combinaison de spires conductrices d'un inducteur d'un four industriel et d'une protection thermique desdites spires, lesdites spires conductrices étant constituées de tubes dans lesquels circule de l'eau de refroidissement, et étant recouverts d'au moins une couche électriquement isolante caractérisée en ce que lesdites spires sont recouvertes extérieurement d'une protection thermique formée d'au moins une couche de matériau réfractaire composite réalisé par une combinaison de fibres réfractaires et d'un liant réfractaire compatible, de façon à constituer un bouclier thermique pouvant supporter des températures extérieures comprises entre 500 et 1600°C.

Les fibres réfractaires sont mises en oeuvre sous forme de rubans tissés ou non tissés ou sous forme d'une pâte.

Selon le mode de mise en oeuvre sous forme de rubans, ceux-ci sont disposés en au moins une épaisseur d'enroulements à recouvrement autour des spires de l'inducteur.

En outre, la protection thermique peut comporter en plus un ensemble de tuiles réfractaires collées ou liées au tube, tangentiellement à celui-ci, l'enrubannage préalable des spires par les fibres réfractaires permettant un bon accrochage de la colle réfractaire sur le conducteur isolé électriquement.

On comprendra mieux l'invention à l'aide de la description ci-après faite en référence aux figures annexées suivantes :

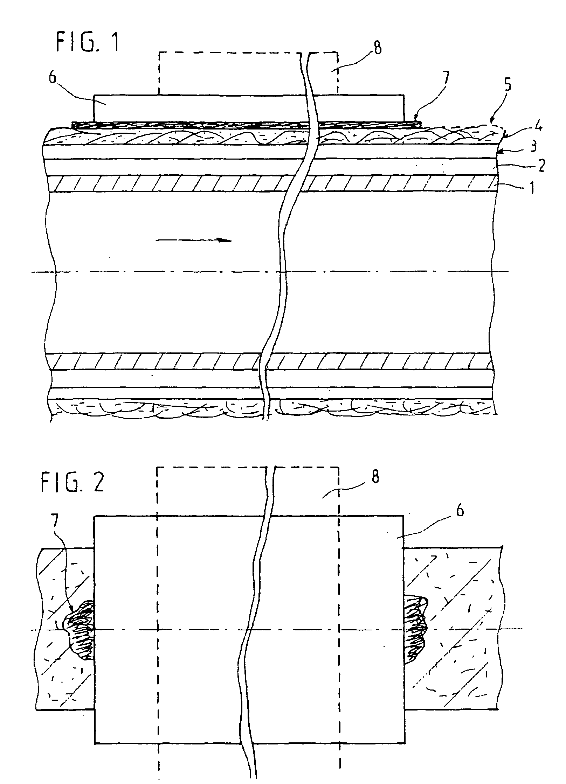

- figure 1 : vue en coupe schématique d'un tube conducteur isolé électriquement et thermiquement selon l'invention ;
- figure 2 : vue de dessus schématique du tube conducteur de la figure 1.

Les spires conductrices d'un inducteur de four industriel sont constituées de tubes (1) en cuivre dans lesquels circule de l'eau de refroidissement.

De façon connue en soi, le tube est recouvert extérieurement d'une couche (2) isolante électriquement et éventuellement d'une pellicule d'élastomère-silicone (3), les couches de ces matériaux s'altérant au-delà de 220 à 250 ° C.

Selon l'idée inventive générale, on recouvre le tube, par dessus l'isolation électrique (2) et la pellicule d'élastomère éventuelle (3), d'une couche composite réfractaire qui fait office de bouclier thermique, c'est-à-dire qui est capable de supporter un gradian de température trés important.

A titre d'exemple, la lace externe du bouclier peut être exposée à des températures de l'ordre de 1000° C tandis que sa face interne dirigée vers l'axe du tube ne dépassera pas 200-220° C environ, l'épaisseur du bouclier thermique et la nature de ses composants étant fonction du niveau de la température extérieure à laquelle est soumis le conducteur.

Selon un mode de réalisation préféré mais non limitatif représenté sur les figures, ce bouclier thermique est constitué par une ou plusieurs couches (4) de matériaux réfractaires composites, réalisées par une combinaison de fibres réfractaires et d'un liant réfractaire compatible.

Les fibres réfractaires peuvent être mises en oeuvre comme sur les figures sous forme de textile souple, par exemple en rubans tissés, en gaines tressées ou en rubans de feutre. Leur nature peut être des libres céramiques. des fibres de silice ou autres matériaux réfractaires inorganiques disponibles en fibres.

Le liant réfractaire peut être un ciment, une colle céramique ou autre barbotine (par exemple à base de silicate de soude (Na₂SᵢO₃), d'argile et d'eau) et se présente sous forme liquide ou pâteuse pour bien mouiller et imprégner les fibres, il est représenté par des pointillés référencés (5).

Le rôle du liant est d'agglomérer les fibres entre elles et de densifier leur structure pour assurer l'étanchéité du bouclier, pour pouvoir ainsi limiter l'épaisseur et le poids de celui-ci tout en assurant une barrière thermique efficace contre le rayonnement et la convection, et une barrière contre les agressions chimiques éventuelles.

Le rôle des fibres textiles est d'assurer la résistance mécanique du composite en l'armant, et de garantir la régularité de l'épaisseur de la protection thermique.

De façon avantageuse, mais non obligatoire, on peut prévoir de fixer, extérieurement à la couche (4), ou en remplacement de une ou deux épaisseurs de fibres, un ensemble de tuiles réfractaires (6).

Ces tuiles réfractaires ont de préférence la forme de plaques rectangulaires, collées ou fixées par tout adhésif ou liant approprié (7), tangentiellement au tube et selon une répartition préétablie le long des tubes.

Ces plaques (6) seront en général collées sur la face des conducteurs orientée vers la charge chauffée à haute température, c'est-à-dire à l'intérieur de l'inducteur, entre les spires et la charge.

Les plaques (6) seront plus denses pour faire écran au rayonnement, ou moins denses sous forme de leutre pour diminuer la conduction.

Dans les cas les plus sévères, une variante consiste à superposer à la plaque (6) en céramique dense faisant écrant au rayonnement, une plaque (8) en céramique fibreuse, sous forme de feutre rigide ou non, faisant écran à la conduction.

L'adhérence du collage des tuiles réfractaires sur le conducteur isolé électriquement est assurée par une imprégnation intime de la colle dans des fibres réfractaires mises en place sur le conducteur.

L'enrubannage préalable du conducteur par des fibres réfractaires permettra un bon accrochage de la colle réfractaire (7) utilisée pour la fixation des plaquettes sur le conducteur isolé électriquement, spécialement dans le cas où l'isolation électrique est recouverte par une pellicule d'élastomère-silicone, matériau réputé pour être anti-adhésif.

La largeur des plaques peut être supérieure au diamètre externe du tube de manière à former écran. Ces plaques sont faciles à installer et à remplacer en cas de détérioration d'où une diminution du coût d'entretien du four.

Selon une variante de réalisation la couche composite réfractaire (4) pourra être une pâte, plus ou moins liquide, constituée de libres réfractaires non tissées intimement mélangées avec le liant (5) préalablement à la mise en oeuvre, l'application sur la pièce isolée à protéger se faisant avec un applicateur adéquat.

Dans le texte qui précède, et sur les dessins, on a présenté, à titre d'exemple non limitatif, des tubes de section circulaire. Bien entendu, l'invention s'applique à tout type de profilé de section ovale ou carrée ou autre et les plaques pourront être collées sur une des faces du tube et non tangentiellement.

## Revendications

1. Combinaison de spires conductrices d'un inducteur d'un four industriel et d'une protection thermique desdites spires, lesdites spires conductrices étant constituées de tubes (1) dans lesquels circule de l'eau de refroidissement, et étant recouverts d'au moins une couche électriquement isolante (2) **caractérisée en ce que** lesdites spires sont recouvertes extérieurement d'une protection thermique formée d'au moins une couche (4) de matériau réfractaire composite réalisé par une combinaison de fibres réfractaires et d'un liant réfractaire compatible (5), de façon à constituer un bouclier thermique pouvant supporter des températures extérieures comprises entre 500 et 1600°C.

2. Combinaison de spires conductrices d'un inducteur d'un four industriel et d'une protection thermique desdites spires, selon la revendication 1, **caractérisée en ce que** les fibres réfractaires sont mises en oeuvre sous forme de rubans tissés.

3. Combinaison de spires conductrices d'un inducteur d'un four industriel et d'une protection thermique desdites spires, selon la revendication 1, **caractérisée en ce que** les fibres réfractaires sont mises en oeuvre sous forme de rubans non tissés, de type feutre.

4. Combinaison de spires conductrices d'un inducteur d'un four industriel et d'une protection thermique desdites spires, selon l'une des revendications 1 à 3, **caractérisée en ce que** les rubans sont disposés en au moins une épaisseur d'enroulement à recouvrement.

5. Combinaison de spires conductrices d'un inducteur d'un four industriel et d'une protection thermique desdites spires, selon la revendication 1, **caractérisée en ce que** les fibres réfractaires sont mises en oeuvre sous forme d'une pâte de fibres son tissées préalablement mélangées au liant (5).

6. Combinaison de spires conductrices d'un inducteur d'un four industriel et d'une protection thermique desdites spires, selon l'une des revendications 1 à 5, **caractérisée en ce que** la protection thermique comporte en outre un ensemble de tuiles réfractaires denses ou moins denses collées ou liées au tube.

7. Combinaison de spires conductrices d'un inducteur d'un four industriel et d'une protection thermique desdites spires, selon la revendication 6, **caractérisée en ce qu'**on superpose à une plaque en céramique dense, une plaque (8) en céramique fibreuse.

8. Combinaison de spires conductrices d'un inducteur d'un four industriel et d'une protection thermique desdites spires, selon l'une des revendications 6 et 7, **caractérisée en ce que** l'adhérence du collage des tuiles réfractaires sur une spire isolée électriquement est assurée par une imprégnation intime de la colle dans des fibres réfractaires mises en place sur le conducteur.

## Patentansprüche

1. Kombination von leitenden Windungen eines Induktors eines Industrieofens und eines Wärmeschutzes dieser Windungen, wobei diese leitenden Windungen von Rohren (1) gebildet sind, in denen das Kühlwasser zirkuliert, und mit mindestens einer elektrisch isolierenden Schicht (2) überzogen sind, **dadurch gekennzeichnet, dass** die Windungen außen mit einem Wärmeschutz umgeben sind, der von mindestens einer Schicht (4) eines feuerfesten Verbundmaterials gebildet ist, das aus einer Kombination von feuerfesten Fasern und einem kompatiblen feuerfesten Bindemittel (5) hergestellt ist, so dass eine Wärmeschleife gebildet wird, die Außentemperaturen zwischen 500 und 1600 °C standhalten kann.

2. Kombination von Windungen eines Induktors eines Industrieofens und eines Wärmeschutzes dieser Windungen nach Anspruch 1, **dadurch gekennzeichnet, dass** die feuerfesten Fasern in Form von Gewebebändern eingesetzt werden.

3. Kombination von Windungen eines Induktors eines Industrieofens und eines Wärmeschutzes dieser Windungen nach Anspruch 1, **dadurch gekennzeichnet, dass** die feuerfesten Fasern in Form von Faservliesbändern vom Typ Filz eingesetzt werden.

4. Kombination von Windungen eines Induktors eines Industrieofens und eines Wärmeschutzes dieser Windungen nach einem der Ansprüche 1 bis 3, **dadurch gekennzeichnet, dass** die Bänder an mindestens einer Wickeldicke mit Überdeckung angeordnet sind.

5. Kombination von Windungen eines Induktors eines Industrieofens und eines Wärmeschutzes dieser Windungen nach Anspruch 1, **dadurch gekennzeichnet, dass** die feuerfesten Fasern in Form einer Faservliespaste, die vorher mit dem Bindemittel (5) gemischt wurde, eingesetzt werden.

6. Kombination von Windungen eines Induktors eines Industrieofens und eines Wärmeschutzes dieser Windungen nach einem der Ansprüche 1 bis 5, **dadurch gekennzeichnet, dass** der Wärmeschutz ferner eine Gesamtheit von dichten oder weniger dichten Platten umfasst, die an das Rohr geklebt oder mit diesem verbunden sind.

7. Kombination von Windungen eines Induktors eines Industrieofens und eines Wärmeschutzes dieser Windungen nach Anspruch 6, **dadurch gekennzeichnet, dass** über einer dichten Keramikplatte eine Faserkeramikplatte (8) angeordnet wird.

8. Kombination von Windungen eines Induktors eines Industrieofens und eines Wärmeschutzes dieser Windungen nach einem der Ansprüche 6 und 7, **dadurch gekennzeichnet, dass** die Klebehaftung der feuerfesten Platten auf einer elektrisch isolierten Windung durch eine enge Imprägnierung des Klebers in feuerfesten Fasern, die auf dem Leiter angeordnet werden, sicher gestellt ist.

## Claims

1. Combination of conductor coils for an inductor of an industrial furnace and a thermal protective means for said coils, said conductor coils comprising tubes (1) in which cooling water circulates, and being covered with at least one electrically insulating layer (2), **characterised in that** said coils are covered externally with a thermal protective means formed from at least one layer (4) of composite refractory material made up of a combination of refractory fibres and a compatible refractory bonding agent (5), so as to form a heat shield which can withstand external temperatures of between 500 and 1600° C.

2. Combination of conductor coils for an inductor of an industrial furnace and a thermal protective means for said coils according to claim 1, **characterised in that** the refractory fibres are used in the form of woven ribbons.

3. Combination of conductor coils for an inductor of an industrial furnace and a thermal protective means for said coils according to claim 1, **characterised in that** the refractory fibres are used in the form of non-woven, felt-type ribbons.

4. Combination of conductor coils for an inductor of an industrial furnace and a thermal protective means for said coils according to one of claims 1 to 3, **characterised in that** the ribbons are disposed in at least one thickness of overlapping winding.

5. Combination of conductor coils for an inductor of an industrial furnace and a thermal protective means for said coils according to claim 1, **characterised in that** the refractory fibres are used in the form of a composition of non-woven fibres previously mixed with the bonding agent (5).

6. Combination of conductor coils for an inductor of an industrial furnace and a thermal protective means for said coils according to one of claims 1 to 5, **characterised in that** the thermal protective means additionally includes an assembly of dense or less dense refractory tiles glued or bonded to the tube.

7. Combination of conductor coils for an inductor of an industrial furnace and a thermal protective means for said coils according to claim 6, **characterised in that** a fibrous ceramic plate (8) is superposed on a dense ceramic plate.

8. Combination of conductor coils for an inductor of an industrial furnace and a thermal protective means for said coils according to one of claims 6 and 7, **characterised in that** the adherence of the gluing for the refractory tiles to an electrically insulated coil is ensured by an intimate impregnation of the glue into refractory fibres placed on the conductor.
